# EUROPÄISCHE PATENTSCHRIFT

(11) **EP 0 694 720 B1**
(45) Veröffentlichungstag und Bekanntmachung des Hinweises auf die Patenterteilung: **10.03.1999**
(21) Anmeldenummer: 95111738.1
(22) Anmeldetag: 26.07.1995
(51) Int. Cl.: F16J 15/12, F01P 11/00

(54) **Thermostatanordnung, insbesondere für Brennkraftmaschinen**
Thermostatic device especially for internal combustion engines
Dispositif thermostatique en particulier pour moteurs à combustion interne

(30) Priorität: 27.07.1994 DE 4426539; 26.10.1994 DE 4438237
(43) Veröffentlichungstag der Anmeldung: 31.01.1996
(73) Patentinhaber: Ford-Werke Aktiengesellschaft, 50735 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Blume, Walter, D-50170 Kerpen (DE); Baudach, Detlev, D-65510 Huenstetten (DE)
(74) Vertreter: Messulam, Alec Moses

(56) Entgegenhaltungen:
- WO-A-90/11434
- FR-A- 2 247 648
- US-A- 3 948 440

## Beschreibung

Die Erfindung bezieht sich auf eine Thermostatanordnung, insbesondere für Brennkraftmaschinen, der im Oberbegriff des Patentanspruches 1 erläuterten Art. Eine solche Anordnung ist aus WO-A- 90/11434 bekannt.

Aus der DE-OS 22 39 201, insbesondere deren Fig. 1, ist weiterhin eine Thermostatanordnung der im Oberbegriff des Patentanspruches 1 erläuterten Art bekannt.

Bei dieser bekannten Thermostatanordnung ist das korbartige Blechgehäuse mit seinem Ringflansch zwischen den beiden Bauteilen eingeklemmt, über die Art der Abdichtung wird jedoch nichts ausgesagt.

Aus der DE-PS 31 38 368 ist eine weitere Thermostatanordnung der im Oberbegriff des Patentanspruches 1 erläuterten Art bekannt, bei der das korbartige Blechgehäuse mit seinem Ringflansch wieder zwischen den beiden Bauteilen eingeklemmt aufgenommen wird, wobei jedoch zur Abdichtung der Thermostatanordnung eine auf den Außenumfang des Ringflansches aufgesetzte Profildichtung angeordnet ist.

Aus der DE-OS 37 14 528 ist eine Dichtung für Verbrennungsmotoren bekannt, die einen besonders einfachen und zweckmäßigen Aufbau aufweist.

Die Aufgabe der Erfindung ist es, eine Thermostatanordnung, insbesondere für Brennkraftmaschinen, der im Oberbegriff des Patentanspruches 1 erläuterten Art derart zu verbessern, daß mit weniger Bauteilen eine zuverlässige Anordnung und Abdichtung der Thermostatanordnung und eine einfachere Montage erzielt werden kann.

Gemäß der Erfindung wird diese Aufgabe gelöst, indem bei einer Thermostatanordnung, insbesondere für Brennkraftmaschinen, der im Oberbegriff des Patentanspruches 1 erläuterten Art, die im Kennzeichenteil des Patentanspruches 1 aufgezeigten Merkmale angewendet werden.

In den Ansprüchen 2 und 3 sind weitere zweckmäßige Ausführungen der Erfindung erläutert.

Dadurch, daß ein korbartiges Blechteil, das über einen einstückigen Ringflansch zwischen den beiden Bauteilen abgedichtet eingeklemmt ist, aus einer, auf beiden Seiten mit einer dünnen Schicht aus elastischem Material versehenen Blechlage besteht, kann die Anordnung der Thermostatanordnung unmittelbar zwischen den beiden Bauteilen in eingeklemmter Form erfolgen, wobei der dann zwischen den beiden Bauteilen eingeklemmte Ringflansch unmittelbar auch die Abdichtfunktion mit übernimmt.

Die Erfindung wird anhand eines in der beiliegenden Zeichnung gezeigten Ausführungsbeispieles näher erläutert. Es zeigt:
- Fig. 1: eine Ansicht einer Thermostatanordnung an einer Brennkraftmaschine an der die erfindungsgemäße Ausbildung des Blechgehäuses vorgesehen ist;
- Fig. 2: eine Unteransicht der Thermostatanordnung nach Fig. 1 bei entferntem unteren Bauteil;
- Fig. 3: einen vertikalen Schnitt durch die Thermostatanordnung nach Fig. 1 entlang der Linie III-III und
- Fig. 4: eine vergrößerte Darstellung des Bereiches im Kreis IV in Fig. 3.

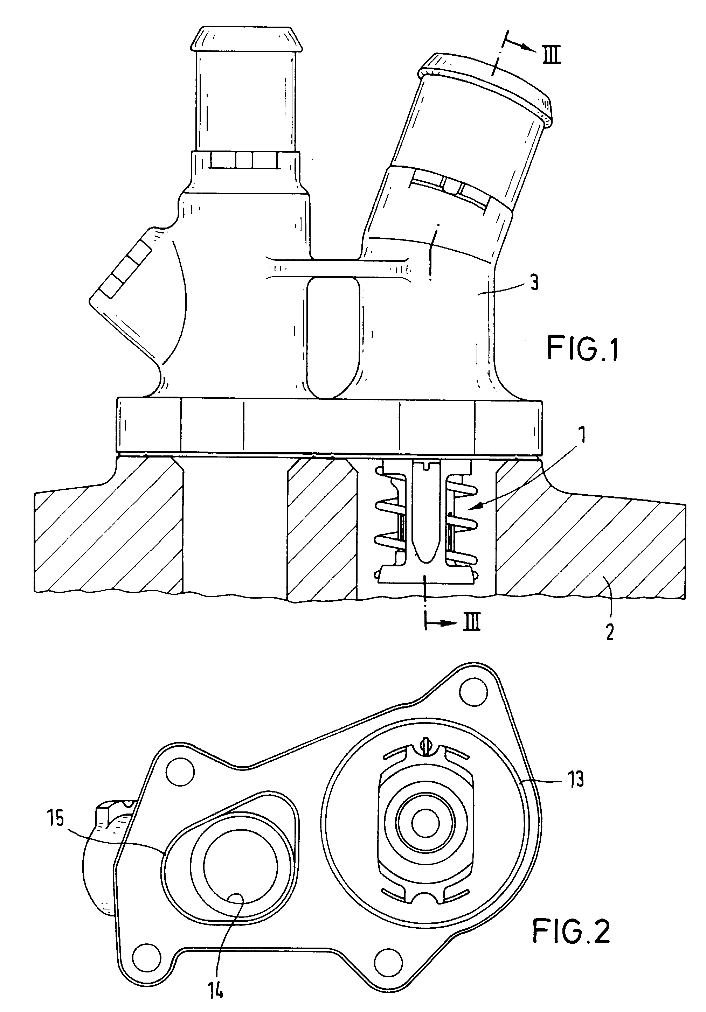

In der in den Fig. 1 und 2 gezeigten Thermostatanordnung an einer Brennkraftmaschine ist die als ganzes mit 1 bezeichnete Thermostatanordnung zwischen zwei Bauteilen 2 und 3 eingeklemmt aufgenommen.

Das eine Bauteil 2 kann hierbei der Zylinderblock oder der Zylinderkopf der Brennkraftmaschine sein und das zweite Bauteil 3 ist vorzugsweise ein Anschlußstutzen für eine flexible Kühlmittelleitung.

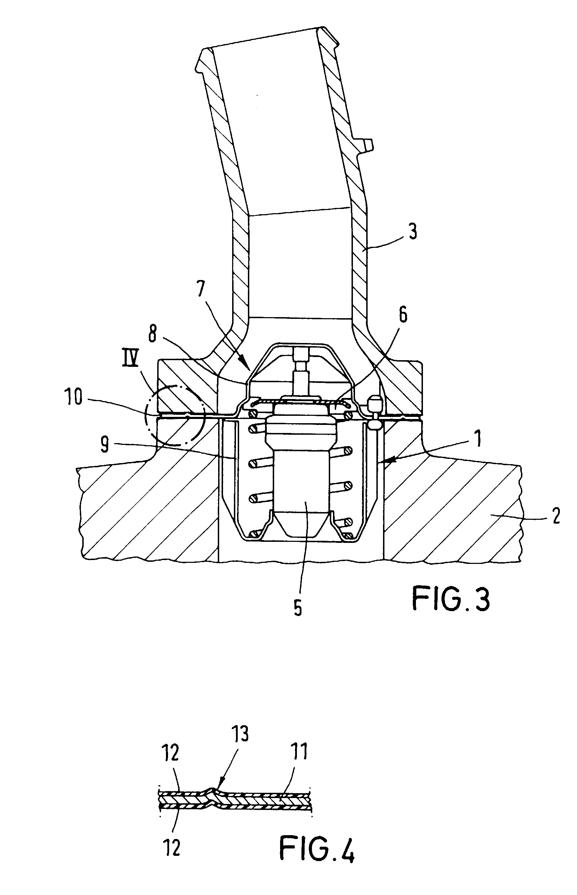

wie aus Fig. 3 ersichtlich, ist ein Dehnstoffelement 5 mit einem von ihm betätigten Verschlußteil 6 ist in einem korbartigen Blechgehäuse 7 aufgenommen, das aus einem oberen Korbteil 8 und einem unteren Korbteil 9 besteht, die miteinander in bekannter Weise durch Verstemmen von Befestigungslaschen verbunden sind. Das obere Korbteil 8 weist einen Ringflansch 10 auf, der zwischen den beiden Bauteilen 2 und 3 abgedichtet eingeklemmt ist.

Bei den bekannten Thermostatanordnungen waren die beiden korbartigen Blechteile 8 und 9 aus einem normalen, ggf. korrisonsbeschichteten Blech gepreßt und ausgestanzt und zum Abdichten des zwischen den beiden Bauteilen 2 und 3 eingeklemmten Ringflansches 10 wurde entweder parallel zum Ringflansch 10 eine plattenförmige Flachdichtung aus einem entsprechenden Dichtungsmaterial oder aber eine aufgesetzte ringförmige Profildichtung aus elastischem Material vorgesehen.

Dementsprechend mußte bei der Montage des Anschlußstutzens 3 zusätzlich zum Einsetzen der Thermostatanordnung 1 die entsprechende Dichtung angeordnet oder aufgesetzt werden und dafür gesorgt werden, daß diese sich auch in ihrer genau ausgerichteten Lage befand.

Gemäß der Erfindung kann diese Montage wesentlich vereinfacht werden, dadurch, daß das eine korbartige Blechteil 8 aus einem Material hergestellt wird, das, wie aus Fig. 4 zu ersehen ist, aus einer Blechlage 11 und zu beiden Seiten aufgebrachten dünne Schichten 12 aus einem elastischen Material besteht.

Solche Materialien sind zwar als Dichtungen für Brennkraftmaschinen dem Fachmann bekannt, die erfinderische Leistung liegt jedoch darin, daß man das für das Halten des Dehnstoffelementes 5 und dessen Verschlußteiles 6 erforderliche Korbteil 8 nun unmittelbar aus einem solchen Material herstellt.

Wie bei solchen Dichtungsanordnungen bekannt, kann an dem Ringflansch 10 eine die Austrittsöffnung umfassende Sicke 13 oder ein Wulst vorgesehen werden.

Bei einer Bauform des Anschlußstutzens 3 in der Weise, das mit einem Anschlußstutzen mehrere Verbindungen geschaffen werden, wird der Ringflansch 10 der Thermostatanordnung 1 zweckmäßigerweise derart erweitert, daß er die weitere Auslaßöffnung 14 ebenfalls umfaßt und auch für diese Öffnung eine Abdichtung mit einer Sicke 15 gebildet wird.

## Patentansprüche

1. Thermostatanordnung, insbesondere für Brennkraftmaschinen, die zwischen einer Austrittsöffnung eines kühlmittelführenden Bauteiles (2) und einem Anschlußstutzen (3) für eine flexible Kühlmittelleitung angeordnet ist und wobei ein Dehnstoffelement (5) mit dem von ihm betätigten Verschlußteil (6) in einem korbartigen Blechgehäuse (7) aufgenommen ist, wobei dessen oberen Korbteil (8) über einen einstückigen, mit elastichem Material beschichteten Ringflansch (10) zwischen dem kühlmittelführenden Bauteil (2) und dem Anschlußstutzen (3) abdichtend eingeklemmt ist,
**dadurch gekennzeichnet,** daß
- das obere Korbteil (8) aus einer auf beiden Seiten mit einer dünnen Schicht (12) aus elastischem Material versehenen Blechlage (11) hergestellt ist.

2. Thermostatanordnung nach Anspruch 1,
**dadurch gekennzeichnet,** daß
- das obere Korbteil (8) an seinem einstückigen Ringflansch (10) mit einer die Austrittsöffnung umfassenden Sicke oder Wulst (13) versehen ist.

3. Thermostatanordnung nach den Ansprüchen 1 und 2,
**dadurch gekennzeichnet,** daß
- das obere Korbteil (8) in seinem Ringflansch (10) mit einer Erweiterung versehen ist, der eine weitere Auslaßöffnung (14) mit umfaßt und diese über eine Sicke (15) abdichtet.

## Claims

1. A thermostat device, especially for internal combustion engines, which is fitted between an outlet opening of a coolant-carrying component (2) and a connecting piece (3) for a flexible coolant line and in which an expansion element (5) together with the closure member (6) actuated thereby is accommodated in a basket-like sheet metal housing (7) of which the upper basket part (8) is sealingly clamped by means of a one-piece, elastic material coated, annular flange (10) between the coolant carrying component (2) and the connecting piece (3),
characterised in that
- the upper basket part (8) is made of a ply of sheet metal (11) provided on each side with a thin layer (12) of elastic material.

2. A thermostat device according to claim 1,
characterised in that
- the upper basket part (8) is provided on its one-piece annular flange (10) with a strengthening corrugation or bulge (13) surrounding the outlet opening.

3. A thermostat device according to claim 1 or claim 2,
characterised in that
- the upper basket part (8) is provided in its annular flange (10) with an enlargement which also surrounds a further outlet opening (14) and seals this by means of a strengthening corrugation (15).

## Revendications

1. Ensemble de thermostat, notamment pour des moteurs à combustion interne, qui est disposé entre une ouverture de sortie d'un élément (2) parcouru de réfrigérant et un piquage (3) pour une conduite flexible de réfrigérant, et un élément (5) en matériau dilatable, pourvu de l'obturateur (6) qu'il actionne, étant reçu dans un boîtier en tôle (7) en forme de panier, dont la partie supérieure (8) de panier est serrée en étanchéité, au moyen d'une bride annulaire (10) solidaire, revêtue de matériau élastique, entre l'élément (2) parcouru de réfrigérant et le piquage (3), **caractérisé** en ce que la partie supérieure (8) de panier est fabriquée à partir d'une couche de tôle (11) pourvue des deux côtés d'une mince couche (12) de matériau élastique.

2. Ensemble de thermostat selon la revendication 1, **caractérisé** en ce que la partie supérieure (8) de panier est pourvue, sur sa bride annulaire (10) solidaire, d'un bourrelet (13) ou d'une moulure entourant l'ouverture de sortie.

3. Ensemble de thermostat selon les revendications 1 et 2, **caractérisé** en ce que la partie supérieure (8) de panier est pourvue, dans sa bride annulaire (10), d'un élargissement qui entoure également une ouverture d'échappement supplémentaire (14) et l'étanche au moyen d'une moulure (15).
